# EUROPÄISCHE PATENTSCHRIFT

(11) **EP 0 833 691 B1**
(45) Veröffentlichungstag und Bekanntmachung des Hinweises auf die Patenterteilung: **30.12.1998**
(21) Anmeldenummer: 96919793.8
(22) Anmeldetag: 21.05.1996
(51) Int. Cl.: B01J 35/04, F01N 3/28

(54) **VORRICHTUNG UND VERFAHREN ZUM HERSTELLEN EINES WABENKÖRPERS AUS VERSCHLUNGENEN BLECHLAGEN**
DEVICE AND METHOD FOR PRODUCING A HONEYCOMB ELEMENT FROM ENTWINED SHEET-METAL LAYERS
DISPOSITIF ET PROCEDE DE FABRICATION D'UN ELEMENT EN NIDS D'ABEILLES A PARTIR DE COUCHES DE TOLES ENTRELACEES

(30) Priorität: 20.06.1995 DE 19522327
(43) Veröffentlichungstag der Anmeldung: 08.04.1998
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9602184
(87) Internationale Veröffentlichungsnummer: WO9700725

(56) Entgegenhaltungen:
- EP-A- 0 322 566
- EP-A- 0 569 109
- EP-A- 0 571 059
- WO-A-90/03220
- WO-A-94/01661
- US-A- 4 923 109

## Beschreibung

Die vorliegende Erfindung bezieht sich auf Vorrichtungen und Verfahren zur Herstellung eines Wabenkörpers mit einer Vielzahl von zumindest teilweise strukturierten Blechen, die eine Vielzahl von für ein Fluid durchlässigen Kanälen bilden.

Im Zuge der immer strenger werdenden Vorschriften hinsichtlich des Ausstoßes von Schadstoffen, insbesondere von Kraftfahrzeugen, werden Katalysator-Trägerkörper verwendet. Bei solchen Katalysator-Trägerkörpern kann es sich um metallische Wabenkörper handeln. Ein solcher Wabenkörper umfaßt z. B. einen Stapel aus einer Vielzahl von zumindest teilweise strukturierten Blechen. Der Stapel ist gegensinnig um sich selbst und um einen Zentralbereich verschlungen. Eine solche Ausführung eines Wabenkörpers ist z. B. durch das Patent U.S. 4,923,109 bekannt.

Durch die WO 90/03220 ist ein metallischer Katalysator-Trägerkörper für Kraftfahrzeuge bekannt, der aus zumindest teilweise strukturierten Blechen aufgebaut ist. Dieser Katalysator-Trägerkörper umfaßt mindestens drei Stapel von Blechen, wobei mindestens drei der Stapel um je eine zugehörige Knicklinie im Zentralbereich des Wabenkörpers gefaltet und im gefalteten Zustand gleichsinnig umeinander und um den Zentralbereich mit den Knicklinien verschlungen sind.

Zur Herstellung solcher Katalysator-Trägerkörper sind Vorrichtungen bekannt, die eine um eine zentrale Achse verdrehbare, an jedem Stapel angreifende gabelförmige Verschlingungseinrichtung und sich zu einer Form schließende Formsegmente umfaßt. Der Innenquerschnitt der verschlossenen Form entspricht dem Querschnitt des Wabenkörpers im gewickelten Zustand. Die häufigste Form, in der die Wabenkörper ausgebildet werden, ist zylinderförmig. Um ein Verschlingen der Stapel um sich selbst und um einen Zentralbereich zu gewährleisten, werden die Formsegmente so zum Stapel hinbewegt, daß während der Drehung der gabelförmigen Verschlingungseinrichtung der Stapel bzw. die Stapel am Rand der Formsegmente anliegen und dieser Rand ein Widerlager bildet. Gegen Ende des Herstellungsvorgangs wird die Form vollständig verschlossen und so dem Wabenkörper seine endgültige Form verliehen.

Dadurch bedingt, daß die Form aus zwei aufeinanderzu und voneinanderweg bewegbaren Formsegmenten besteht, ist der konstruktive Aufwand einer solchen Vorrichtung relativ hoch. Während eines solchen Herstellungsprozesses muß stets sichergestellt werden, daß die Formsegmente einen vorgegebenen Bewegungsablauf einhalten. Aufgrund von Abrieb, Staub oder dergleichen kann es in den Führungen der Formsegmente zu Ablagerungen kommen, die den Bewegungsablauf stören können.

Bei den bekannten Vorrichtungen zur Herstellung eines Wabenkörpers, insbesondere eines Katalysator-Trägerkörpers, besteht die Gefahr, daß während des Schließvorgangs wenigstens ein Formsegment sich gegen die Bewegungsrichtung des noch zu verschlingenden Abschnitts eines Stabes bewegt. Drückt das Formsegment gegen den Abschnitt, so kann es zu einer unerwünschten Deformation des Stapels bzw. der Stapel kommen. Eine Deformation des Stapels führt dazu, daß einzelne Bleche teilweise verbogen werden. Hierdurch bedingt wird die Struktur des fertigen Wabenkörpers beeinträchtigt. Zum einen leidet die Festigkeit des Wabenkörpers und zum anderen kommt es zu einer lokalen Veränderung der Kanalquerschnitte. Eine Veränderung der Kanalquerschnitte führt dazu, daß eine gleichmäßige Strömungsverteilung innerhalb des Wabenkörpers nicht mehr gewährleistet werden kann. Das Strömungsprofil eines Abgases durch einen Katalysator-Trägerkörper ist jedoch mitentscheidend für die katalytische Wirkung des Katalysators.

Hiervon ausgehend liegt der vorliegenden Erfindung die Aufgabe zugrunde, die bekannte Vorrichtung und das Verfahren zur Herstellung eines Wabenkörpers so weiterzubilden, daß während des Herstellungsprozesses die Gefahr der Deformation von Stapeln bzw. einzelner Bleche nicht auftritt. Ferner soll die Vorrichtung gegenüber Umgebungseinflüssen wie z. B. Staub, Schmutz und dergleichen unempfindlicher gestaltet werden.

Erfindungsgemäß wird diese Aufgabe durch eine Vorrichtung mit den Merkmalen des Anspruchs 1 und eine Verfahrensführung mit den Verfahrensschritten nach Anspruch 21 gelöst. Vorteilhafte Weiterbildungen der Vorrichtung bzw. des Verfahrens sind Gegenstand der jeweils abhängigen Ansprüche.

Die erfindungsgemäße Vorrichtung zum Herstellen eines Wabenkörpers aus wenigstens einem Stapel aus einer Vielzahl von zumindest teilweise strukturierten Blechen, die eine Vielzahl von für ein Fluid durchlässigen Kanälen bilden, insbesondere eines Katalysator-Trägerkörpers, umfaßt eine Form, deren Innenkontur der Außenkontur des herzustellenden Wabenkörpers entspricht und eine um eine Achse verdrehbare, an jedem Stapel angreifende gabelartige Umschlingungseinrichtung. Die Vorrichtung zeichnet sich dadurch aus, daß die Form die Verschlingungseinrichtung umgibt und in der Wandung der Form wenigstens ein im wesentlichen parallel zur zentralen Achse verlaufender Durchgang für mindestens ein Stapelende vorhanden ist. Im Gegensatz zu den bekannten Vorrichtungen zum Herstellen eines Wabenkörpers verzichtet die erfindungsgemäße Vorrichtung auf gegeneinander bewegliche Formsegmente. Hierdurch wird eine konstruktiv einfache und wirkungsvolle Vorrichtung bereitgestellt.

Besonders günstig ist es zum Wickeln von einem Stapel, wenn dieser durch zwei Durchgänge geführt und von der Mitte aus gewickelt wird. Es ist jedoch auch möglich, einen oder mehrere Stapel gefaltet einzulegen, so daß beide Enden jedes Stapels jeweils durch einen gemeinsamen Durchgang laufen. Auch kann ein Stapel an seinem Ende von der Verschlingungseinrichtung gefaßt und nach Art einer mehrgängigen Spirale verschlungen werden. Schließlich ist es auch möglich, daß die Verschlingungseinrichtung den gefaßten Teil des Stapels zusammenquetscht, so daß ein etwa sternförmiges Zentrum entsteht.

Mit der erfindungsgemäßen Vorrichtung lassen sich bevorzugt Wabenkörper mit rundem Querschnitt herstellen, jedoch ist auch die Herstellung mit anderen Querschnitten möglich, insbesondere mit polygonalen aber an den Ecken abgerundeten Querschnitten, solange die Abweichungen von der Kreisform nicht sehr groß sind, d. h. die einzelnen Seiten von ähnlicher Länge sind.

Zum Wickeln eines Wabenkörpers aus z. B. drei Stapeln, wie er in der WO 90/03220 beschrieben ist, weist die Form drei im wesentlichen parallel zur zentralen Achse verlaufende rechteckförmige Durchgänge für die Stapelenden auf. Die einzelnen Stapel werden durch die einzelnen Durchgänge in die Form eingeführt. Es liegt auf der Hand, daß ein jeder Stapel sich teilweise aus der Form erstreckt. Die gabelartige Verschlingungseinrichtung greift in einem Zentralbereich an jedem Stapel an und verschlingt die einzelnen Stapel gegeneinander. Während des Wickelvorgangs gleiten die einzelnen Stapel durch die Durchgänge hindurch. Der Wickelvorgang wird solange ausgeführt, bis alle Stapel in die Form hineingezogen worden sind.

Bevorzugt wird eine Vorrichtung, bei der die Durchgänge äquidistant zueinander über dem Innenumfang der Form angeordnet sind. Diese Anordnung ist vorteilhaft, da sie zu einem symmetrisch aufgebauten bzw. gewickelten Wabenkörper führt. Sollen andere Wickelergebnisse erreicht werden, so können durch entsprechende Anordnungen der Durchgänge solche erzielt werden.

Während des Wickelvorgangs werden die noch aus der Form herausragenden Abschnitte der Stapel in diese hineingezogen. Um die beim Hereinziehen eines jeden Stapels entstehende Reibung zwischen dem Stapel und der Wandung der Durchgänge zu minimieren, wird vorgeschlagen, wenigstens eine Längsfläche mindestens eines Durchgangs im Querschnitt konvex auszubilden.

Durch diese Ausbildung einer Längsfläche entsteht zwischen dieser Längsfläche und einer Fläche eines Stapels eine Linienberührung, die die Reibung zwischen der Längsfläche des Durchgangs und dein Stapel minimiert.

Bevorzugt wird eine Vorrichtung, bei der mindestens eine Längsfläche mindestens eines Durchgangs mit einer Gleitschicht versehen ist. Hierdurch wird die Reibung zwischen Stapel und Längsfläche weiter minimiert. Die Gleitschicht ist dabei vorzugsweise verschleißfest, so daß nur ein geringer Abrieb zwischen einem Stapel und der Längsfläche bzw. Gleitschicht entsteht. Hierzu ist besonders eine Gleitschicht aus einem keramischen Werkstoff geeignet. Die Gleitschicht kann auf der Längsfläche im Plasmaspritzverfahren aufgebracht werden. Die lichte Breite eines jeden Durchgangs entspricht der Dicke des Stapels.

Zum Ausbringen des Wabenkörpers aus der Form weist die Vorrichtung einen in Längsrichtung der Form und in dieser verschieblichen Stempel auf. Der Stempel weist einen dem Innenquerschnitt der Form entsprechenden Querschnitt auf. Hierdurch wird ein gleichmäßiges Herausbringen des Wabenkörpers aus der Form erreicht. Die einzelnen Bleche des Wabenkörpers können hierdurch nicht gegeneinander verschoben werden.

Vorzugsweise weist die Vorrichtung eine Form auf, die einen vorzugsweise umlaufenden, Außenflansch aufweist, der mit einer Grundplatte lösbar verbunden ist. Die Grundplatte weist vorzugsweise eine Öffnung auf, durch die sich eine mit dem Stempel verbundene Betätigungsstange hindurch erstreckt.

Um die Höhe der Vorrichtung zu minimieren wird vorgeschlagen, die Grundplatte mit einer Öffnung zu versehen, durch die der Stempel hindurchführbar ist.

Zum Wickeln des Wabenkörpers weist die Verschlingungseinrichtung wenigstens zwei an einem Träger angeordnete Wickeldorne auf, die mit dem oder den Stapel(n) in Eingriff bringbar sind. Die Wickeldorne können sich durch den Stempel hindurch erstrecken. Um die beim Verschlingen auftretenden Kräfte aushalten zu können, müssen die Wickeldorne relativ stabil sein, jedoch sollen sie andererseits möglichst dünn gestaltet sein, damit keine großen zusätzlichen Kanäle im Wabenkörper entstehen. Stabilisierend für die Wickeldorne ist z.B. eine zusätzliche Einspannung an den freien Enden der Wickeldorne nach dem Einlegen der Bleche. Auch eine vom runden Querschnitt abweichende Form der Wickeldorne, insbesondere ein Querschnitt in Tropfenform oder gebogener Tropfenform, wirken stabilisierend. Eine Tropfenform entspricht zudem der beim Wickeln ohnehin entstehenden Form der an den Wickeldornen entstehenden Kanäle.

Vorzugsweise ist die Form einstückig ausgebildet. Sie kann z. B. aus einem Gußteil hergestellt werden. Auch die Ausbildung einer Form aus wenigstens zwei Formsegmenten ist zweckmäßig.

Zur Herstellung eines Wabenkörpers mit einer Vielzahl von für ein Fluid durchlässigen Kanälen aus einer Vielzahl von zumindest teilweise strukturierten Blechlagen wird ein Verfahren vorgeschlagen, bei dem mindestens ein Stapel aus einer Mehrzahl von zumindest teilweise strukturierten Blechlagen geschichtet wird. Jeder Stapel wird in eine der Außenform des herzustellenden Wabenkörpers entsprechende Form eingelegt. Mindestens ein Ende jedes Stapels ragt durch mindestens einen in der Form ausgebildeten Durchgang aus der Form heraus. Jeder Stapel wird von einer Umschlingungseinrichtung in einem zentralen Bereich gehalten und durch Drehen der Verschlingungseinrichtung und der Form relativ zueinander werden die Stapel zu einem Wabenkörper verschlungen, der die ganze Form ausfüllt.

Durch diese Verfahrensführung wird auf komplizierte Bewegungsabläufe verzichtet. Das Verfahren ist einfach und ohne weitere Schwierigkeiten durchführbar. Form und/oder Verschlingungseinrichtung müssen nur relativ zueinander verdrechbar sein.

Gemäß einem weiteren vorteilhaften Gedanken wird vorgeschlagen, mindestens zwei Stapel aus einer Mehrzahl von zumindest teilweise strukturierten Blechlagen zu schichten. Anschließend wird jeder Stapel um je eine Knicklinie gefaltet. Danach werden die Stapel in eine der Außenform des herzustellenden Wabenkörpers entsprechende Form eingebracht und in dieser von einer Verschlingungseinrichtung in einem zentralen Bereich gehalten. Vorzugsweise ist hierzu je ein Wickeldorn im Bereich jeder Knicklinie vorhanden. Beim Einlegen der Stapel in die Form ragen jeweils beide Enden eines jeden Stapels durch den gleichen Durchgang nach außen.

Weitere Vorteile und Merkmale der erfindungsgemäßen Vorrichtung werden anhand eines in der Zeichnung dargestellten Ausführungsbeispiels erläutert. Es zeigen
- Fig. 1: schematisch in der Draufsicht eine Vorrichtung mit drei zu wickelnden Stapeln,
- Fig. 2 u. 3: Momentzustände während des Wickelvorgangs,
- Fig. 4: einen vollständig gewickelten Wabenkörper in einer Form,
- Fig. 5: vergrößert eine Einzelheit X nach Fig. 1 ohne Stapel und
- Fig. 6: eine Vorrichtung im Querschnitt.

Die Vorrichtung umfäßt eine Form 5, in deren Wandung 11 drei rechteckförmige Durchgänge 8, 9 und 10 ausgebildet sind. Die Durchgänge 8, 9 und 10 sind äquidistant zueinander über den Innenumfang der Form 5 ausgebildet. Die Form 5 weist an der Außenseite der Wandung 11 einen umlaufenden Außenflansch 13 auf, der über nicht dargestellte Verbindungsmittel wie z. B. Schrauben mit einer Grundplatte 14 lösbar verbunden ist. In der Grundplatte 14 ist eine Öffnung 15 ausgebildet, durch ein Stempel 16 hindurchführbar ist. Der Querschnitt der Öffnung 15 und des Stempels 16 entspricht dem lichten Querschnitt der Form 5.

Die Durchgänge 8, 9 und 10 weisen Längsflächen 11, 12 auf, die im Querschnitt konvex ausgebildet sind. Die Längsflächen 11, 12 sind jeweils mit einer Gleitschicht 18, 19 versehen, bei denen es sich um eine Gleitschicht aus keramischem Werkstoff handelt.

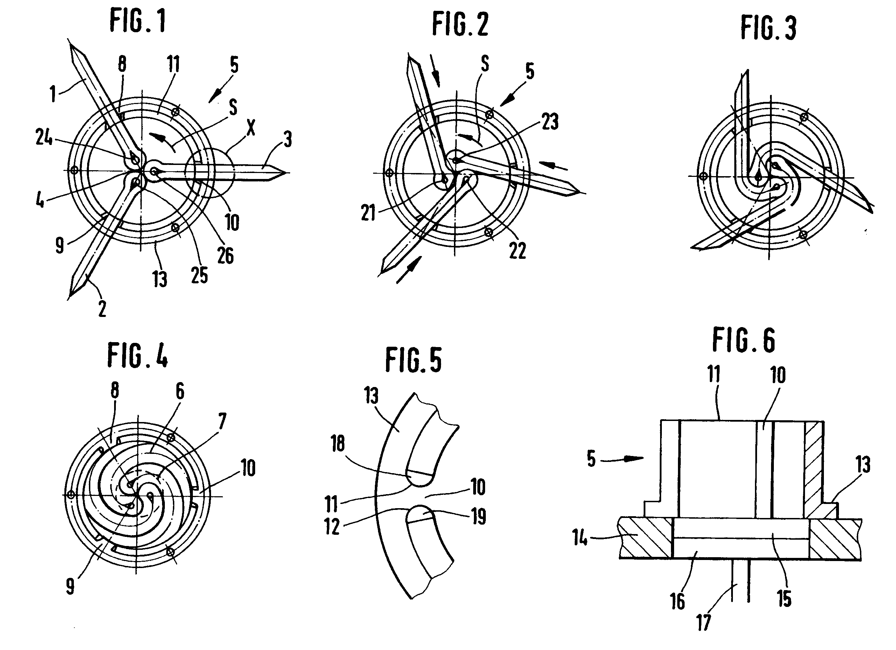

Nicht dargestellt ist in den Fig. 1 bis 6 eine Verschlingungseinrichtung, welche die Stapel 1, 2 und 3 um eine senkrecht auf der Zeichnungsebene stehende Achse 4 verdrehbar ist. Die Verschlingungseinrichtung weist Wickeldorne 24, 25, 26 auf, die in jeden Stapel 1, 2, 3 greifen und in Drehsinn S der Verschlingungseinrichtung verdrehen. Bevorzugt haben die Wickeldorne einen Querschnitt in Form eines gebogenen Tropfens, der sich ohne zusätzlichen Platzbedarf der ohnehin beim Verschlingen entstehenden Kanalform am Wickeldorn anpaßt und gleichzeitig die Kräfte beim Verschlingen gut aufnehmen kann.

In der Fig. 1 ist eine Form 5 dargestellt, in deren Innenraum drei Stapel 1, 2, 3 angeordnet sind. Die Stapel 1, 2, 3 sind aus einer Mehrzahl von zumindest teilweise strukturierten Blechlagen geschichtet. Jeder Stapel 1, 2, 3 ist um je eine Knicklinie 21, 22, 23 gefaltet. Die so gefalteten Stapel 1, 2 und 3 sind in die Form 5 eingebracht worden. Jeder Stapel 1, 2 und 3 ist von einer Verschlingungseinrichtung in einem zentralen Bereich 7 gehalten, wobei je ein Wickeldorn 24, 25, 26 der Verschlingungseinrichtung im Bereich jeder Knicklinie 21, 22, 23 vorhanden ist. Die beiden Enden jedes Stapels 1, 2, 3 ragen durch den gleichen Durchgang 8, 9, 10 nach außen aus der Form 5 heraus.

Durch Drehen der Wickeldorne 24, 25, 26 um die zentrale Achse 4 in Richtung S werden die einzelnen Stapel 1, 2 und 3 gleichsinnig verschlungen. Während des Wickelvorgangs gleiten die Stapel 1, 2 un 3 entlang der Gleitschichten 18, 19 in den Innenraum der Form 5. Der fertig gewickelte Wabenkörper 6 weist umeinander umschlungene und um einen zentralen Bereich 7 umschlungene Stapel 1, 2 und 3 auf, wie dies aus der Fig. 4 ersichtlich ist.

Der fertig gewickelte Wabenkörper 6 kann mittels des Stempels 16 aus der feststehenden Form 5 herausgeschoben werden. Während des Herausbringens des Wabenkörpers 5 kann dieser in ein oberhalb der Form 5 angeordnetes Gehäuse eingebracht werden. Beim Wickelvorgang ist es gleichwertig, ob die Verschlingungseinrichtung, die Form oder beide gegensinnig gedreht werden, da es nur auf die relative Bewegung gegeneinander ankommt. Auf diese Weise lassen sich auch nicht kreisförmige Querschnitte des Wabenkörpers herstellen, solange die Abweichung von der Kreisform nicht zu groß wird. Die Erfindung eignet sich für eine kostengünstige und mit geringen Werkzeugkosten verbundene Herstellung von metallischen Wabenkörpern.

### BEZUGSZEICHENLISTE

- 1: Stapel
- 2: Stapel
- 3: Stapel
- 4: Achse
- 5: Form
- 6: Wabenkörper
- 7: Zentralbereich
- 8, 9, 10: Durchgänge
- 11, 12: Längsflächen
- 13: Außenflansch
- 14: Platte
- 15: Öffnung
- 16: Stempel
- 17: Betätigungsstange
- 18: Gleitschicht
- 19: Gleitschicht
- 21,22,23: Knicklinie
- 24,25,26: Wickeldorn

## Patentansprüche

1. Vorrichtung zum Herstellen eines Wabenkörpers, insbesondere eines Katalysator-Trägerkörpers, aus wenigstens einem Stapel (1, 2, 3) aus einer Vielzahl von zumindest teilweise strukturierten Blechlagen, die eine Vielzahl von für ein Fluid durchlässigen Kanälen bilden, wobei die Vorrichtung eine um eine zentrale Achse (4) verdrehbare, an jedem Stapel (1, 2, 3) angreifende gabelartige Umschlingungseinrichtung aufweist und eine Form (5) umfäßt,
**dadurch gekennzeichnet**, daß die Form (5) die Umschlingungseinrichtung umgibt, die Innenkontur der Form (5) unveränderlich ist und der Außenkontur des herzustellenden Wabenkörpers entspricht und in der Wandung (11) der Form (5) wenigstens ein im wesentlichen parallel zur zentralen Achse (4) verlaufender Durchgang (8, 9, 10) für ein oder mehrere Stapelenden vorhanden sind.

2. Vorrichtung nach Anspruch 1, dadurch gekennzeichnet, daß in der Wandung (11) wenigstens zwei Durchgänge (8, 9, 10) ausgebildet sind.

3. Vorrichtung nach Anspruch 2, dadurch gekennzeichnet, daß die Durchgänge (8, 9, 10) äquidistant zueinander über dem Innenumfang der Form (5) angeordnet sind.

4. Vorrichtung nach Anspruch 1, 2 oder 3, gekennzeichnet durch wenigstens eine im Querschnitt konvex ausgebildete Längsfläche (11, 12) mindestens eines Durchgangs (8, 9, 10).

5. Vorrichtung nach Anspruch 1, 2, 3 oder 4, dadurch gekennzeichnet, daß mindestens eine Längsfläche (11, 12) wenigstens eines Durchgangs (8, 9, 10) mit einer Gleitschicht (18, 19) versehen ist.

6. Vorrichtung nach Anspruch 5, dadurch gekennzeichnet, daß die Gleitschicht verschleißfest ist.

7. Vorrichtung nach Anspruch 6, dadurch gekennzeichnet, daß die Gleitschicht aus einem keramischen Werkstoff besteht.

8. Vorrichtung nach einem der Ansprüche 5 bis 7, dadurch gekennzeichnet, daß die Gleitschicht plasmagespritzt ist.

9. Vorrichtung nach einem der Ansprüche 1 bis 8, dadurch gekennzeichnet, daß die Breite (B) eines jeden Durchgangs (8, 9, 10) etwa der Dicke (D) eines Stapels (1, 2, 3) entspricht.

10. Vorrichtung nach einem der Ansprüche 1 bis 9, gekennzeichnet durch einen in Längsrichtung der Form (5) und in dieser verschieblichen Stempel (16).

11. Vorrichtung nach Anspruch 10, dadurch gekennzeichnet, daß der Stempel (16) einen dem Innenquerschnitt der Form (5) entsprechenden Querschnitt aufweist.

12. Vorrichtung nach einem der Ansprüche 1 bis 11, dadurch gekennzeichnet, die Form (5) einen, vorzugsweise umlaufenden, Außenflansch (13) aufweist, der mit einer Grundplatte (14) lösbar verbunden ist.

13. Vorrichtung nach Anspruch 12, dadurch gekennzeichnet, daß die Grundplatte (14) eine Öffnung (15) aufweist, durch die sich eine mit dem Stempel (16) verbundene Betätigungsstange (17) hindurch erstreckt.

14. Vorrichtung nach Anspruch 12, dadurch gekennzeichnet, daß die Grundplatte (14) eine Öffnung (15) aufweist, durch die der Stempel (16) hindurchführbar ist.

15. Vorrichtung nach einem der vorhergehenden Ansprüche, dadurch gekennzeichnet, daß die Umschlingungseinrichtung wenigstens zwei an einem Träger angeordnete Wickeldorne (24, 25, 26) aufweist, die mit dem oder den Stapel(n) (1, 2, 3) in Eingriff bringbar sind.

16. Vorrichtung nach Anspruch 15, dadurch gekennzeichnet, daß die Wickeldorne (24, 25, 26) einen den Verschlingungskräften angepaßten, aber möglichst kleinen Querschnitt haben, insbesondere von der Form eines - Tropfens oder gebogenen Tropfens.

17. Vorrichtung nach Anspruch 15 oder 16, dadurch gekennzeichnet, daß die Wickeldorne (24, 25, 26) beidseitig in eine Verschlingungseinrichtung einspannbar sind.

18. Vorrichtung nach einem der vorhergehenden Ansprüche, dadurch gekennzeichnet, daß Form (5) und Verschlingungseinrichtung relativ zueinander verdrehbar sind.

19. Vorrichtung nach einem der vorhergehenden Ansprüche, dadurch gekennzeichnet, daß die Form (5) einstückig ausgebildet ist.

20. Vorrichtung nach einem der vorhergehenden Ansprüche, dadurch gekennzeichnet, daß die Form (5) wenigstens zwei Formsegmente umfaßt.

21. Vorrichtung nach einem der vorhergehenden Ansprüche, dadurch gekennzeichnet, daß die Vorrichtung zum Verschlingen von zwei oder mehr um Knicklinien (21, 22, 23) gefalteten Stapeln (1, 2, 3) von Blechlagen eine der Zahl der Stapel entsprechende Anzahl von Wickeldornen (24, 25, 26) an der gabelartigen Umschlingungsvorrichtung aufweist und eine gleiche Anzahl von Durchgängen (8, 9, 10).

22. Verfahren zur Herstellung eines Wabenkörpers mit einer Vielzahl von für ein Fluid durchlässigen Kanälen aus einer Vielzahl von zumindest teilweise strukturierten Blechlagen, bei dem
- mindestens ein Stapel (1, 2, 3) aus einer Mehrzahl von zumindest teilweise, strukturierten Blechlagen geschichtet wird,
- jeder Stapel (1, 2, 3) in eine der Außenform des herzustellenden Wabenkörpers entsprechende Form (5) eingelegt wird,
- wobei zumindest ein Ende jedes Stapels (1, 2, 3) durch mindestens einen Durchgang (8, 9, 10) aus der Form (5) herausragt,
- wobei jeder Stapel (1, 2, 3) von einer im Zentralbereich der Form (5) angeordneten Verschlingungseinrichtung gehalten wird und
- wobei alle Stapel (1, 2, 3) durch relatives Drehen der Verschlingungseinrichtung gegenüber der Form (5) unter Einziehen der aus der Form herausragenden Stapelenden in die Form (5) zu einem Wabenkörper verschlungen werden, der die ganze Form (5) ausfüllt.

23. Verfahren nach Anspruch 22, bei dem
- mindestens zwei Stapel (1, 2, 3) aus einer Mehrzahl von zumindest teilweise strukturierten Blechlagen geschichtet werden,
- jeder Stapel (1, 2, 3) um je eine Knicklinie (21, 22, 23) gefaltet wird und
- die Stapel (1, 2, 3) in eine der Außenform des herzustellenden Wabenkörpers entsprechende Form (5) eingebracht und in dieser von einer Umschlingungseinrichtung in einem Zentralbereich gehalten werden, wobei vorzugsweise je ein Wickeldorn (24, 25, 26) im Bereich jeder Knicklinie (21, 22, 23) vorhanden ist.

24. Verfahren nach Anspruch 23, wobei beim Einlegen in die Form (5) jeweils beide Enden jedes Stapels (1, 2, 3) jeweils durch den gleichen Durchgang (8, 9, 10) nach außen ragen.

## Claims

1. Apparatus for producing a honeycomb body, in particular a catalyst carrier body, from at least one stack (1, 2, 3) comprising a plurality of at least partially structured sheet layers which form a plurality of passages through which a fluid can pass, wherein the apparatus has a fork-like wrapping device which is rotatable about a central axis (4) and which engages each stack (1, 2, 3), and the apparatus includes a form member (5), characterised in that the form member (5) surrounds the wrapping device, the inside contour of the form member (5) is invariable and corresponds to the outside contour of the honeycomb body to be produced, and provided in the wall (11) of the form member (5) is at least one through passage (8, 9, 10) for one or more stack ends, the through passage extending substantially parallel to the central axis (4).

2. Apparatus according to claim 1 characterised in that there are at least two through passages (8, 9, 10) in the wall (11).

3. Apparatus according to claim 2 characterised in that the through passages (8, 9, 10) are arranged equidistantly from each other over the inside periphery of the form member (5).

4. Apparatus according to claim 1, claim 2 or claim 3 characterised by at least one longitudinal surface (11, 12) of at least one through passage (8, 9, 10), the longitudinal surface being of a convex configuration in cross-section.

5. Apparatus according to claim 1, claim 2, claim 3 or claim 4 characterised in that at least one longitudinal surface (11, 12) of at least one through passage (8, 9, 10) is provided with an anti-friction layer (18, 19).

6. Apparatus according to claim 5 characterised in that the anti-friction layer is wear-resistant.

7. Apparatus according to claim 6 characterised in that the anti-friction layer comprises a ceramic material.

8. Apparatus according to one of claims 5 to 7 characterised in that the anti-friction layer is plasma-sprayed.

9. Apparatus according to one of claims 1 to 8 characterised in that the width (B) of each through passage (8, 9, 10) approximately corresponds to the thickness (D) of a stack (1, 2, 3).

10. Apparatus according to one of claims 1 to 9 characterised by a ram (16) which is displaceable in the form member (5) in the longitudinal direction thereof.

11. Apparatus according to claim 10 characterised in that the ram (16) is of a cross-section corresponding to the internal cross-section of the form member (5).

12. Apparatus according to one of claims 1 to 11 characterised in that the form member (5) has a preferably circumferentially extending outside flange (13) which is releasably connected to a base plate (14).

13. Apparatus according to claim 12 characterised in that the base plate (14) has an opening (15) through which extends an actuating bar (17) which is connected to the ram (16).

14. Apparatus according to claim 12 characterised in that the base plate (14) has an opening (15) through which the ram (16) can be passed.

15. Apparatus according to one of the preceding claims characterised in that the wrapping device has at least two winding bars (24, 25, 26) which are arranged on a carrier and which can be brought into engagement with the stack or stacks (1, 2, 3).

16. Apparatus according to claim 15 characterised in that the winding bars (24, 25, 26) are of a cross-section which is matched to the twisting forces but which is as small as possible, in particular in the shape of a drop or a curved drop.

17. Apparatus according to claim 15 or claim 16 characterised in that the winding bars (24, 25, 26) can be clamped at both sides into a twisting device.

18. Apparatus according to one of the preceding claims characterised in that the form member (5) and the twisting device are rotatable relative to each other.

19. Apparatus according to one of the preceding claims characterised in that the form member (5) is of a one-piece structure.

20. Apparatus according to one of the preceding claims characterised in that the form member (5) includes at least two form member segments.

21. Apparatus according to one of the preceding claims characterised in that the apparatus for twisting two or more stacks (1, 2, 3) of sheet layers, which stacks are folded about bend lines (21, 22, 23), has a number, corresponding to the number of stacks, of winding bars (24, 25, 26) at the fork-like wrapping device, and an equal number of through passages (8, 9, 10).

22. A process for producing a honeycomb body having a plurality of passages through which a fluid can pass from a plurality of at least partially structured sheet layers, in which
- at least one stack (1, 2, 3) is formed by arranging in layers a plurality of at least partially structured sheet layers,
- each stack (1, 2, 3) is put into a form member (5) corresponding to the outside shape of the honeycomb body to be produced,
- wherein at least one end of each stack (1, 2, 3) projects out of the form member (5) through at least one through passage (8, 9, 10),
- wherein each stack (1, 2, 3) is held by a twisting device arranged in the central region of the form member (5), and
- wherein all stacks (1, 2, 3) are twisted to form a honeycomb body which fills the entire form member (5) by relative rotary movement of the twisting device with respect to the form member (5), with the stack ends that project out of the form member being drawn into the form member (5).

23. A process according to claim 22 in which
- at least two stacks (1, 2, 3) are formed by arranging in layers a plurality of at least partially structured sheet layers,
- each stack (1, 2, 3) is folded about a respective bend line (21, 22, 23), and
- the stacks (1, 2, 3) are introduced into a form member (5) corresponding to the outside shape of the honeycomb body to be produced and held in the form member by a wrapping device in a central region, wherein there is preferably a respective winding bar (24, 25, 26) in the region of each bend line (21, 22, 23).

24. A process according to claim 23 wherein upon being put into the form member (5) the two ends of each stack (1, 2, 3) project outwardly through the same respective through passage (8, 9, 10).

## Revendications

1. Dispositif destiné à la fabrication d'un corps alvéolaire, notamment d'un corps alvéolaire de support de catalyseur, constitué d'au moins une pile (1, 2, 3) d'une pluralité de couches de tôles au moins partiellement structurées qui forment une pluralité de canaux pouvant être traversés par un fluide, le dispositif comportant un dispositif d'enroulement du type fourche pouvant tourner autour d'un axe central (4), lequel saisit chaque pile (1, 2, 3), et un gabarit (5),
caractérisé en ce que le gabarit (5) entoure le dispositif d'enroulement, en ce que le contour intérieur du gabarit (5) est invariable et correspond au contour extérieur du corps alvéolaire à fabriquer, et en ce qu'il est prévu dans la paroi (11) du gabarit (5) au moins un passage (8, 9, 10) pour une ou plusieurs extrémités de la pile, qui s'étend globalement parallèlement à l'axe central (4).

2. Dispositif suivant la revendication 1, caractérisé en ce qu'au moins deux passages (8, 9, 10) sont pratiqués dans la paroi (11).

3. Dispositif suivant la revendication 2, caractérisé en ce que les passages (8, 9, 10) sont disposés à égale distance les uns des autres sur la circonférence intérieure du gabarit (5).

4. Dispositif suivant la revendication 1, 2 ou 3, caractérisé par au moins une surface longitudinale (11, 12) de section transversale convexe de l'un au moins des passages (8, 9, 10).

5. Dispositif suivant la revendication 1, 2, 3 ou 4, caractérisé en ce qu'au moins une surface longitudinale (11, 12) de l'un au moins des passages (8, 9, 10) est munie d'une couche de glissement (18, 19).

6. Dispositif suivant la revendication 5, caractérisé en ce que la couche de glissement résiste à l'usure.

7. Dispositif suivant la revendication 6, caractérisé en ce que la couche de glissement est constituée d'un matériau céramique.

8. Dispositif suivant l'une quelconque des revendications 5 à 7, caractérisé en ce que la couche de glissement est réalisée par pulvérisation de plasma.

9. Dispositif suivant l'une quelconque des revendications 1 à 8, caractérisé en ce que la largeur (B) de chaque passage (8, 9, 10) correspond approximativement à l'épaisseur (D) d'une pile (1, 2, 3).

10. Dispositif suivant l'une quelconque des revendications 1 à 9, caractérisé par un poinçon (16) disposé dans le sens longitudinal du gabarit (5) et pouvant être déplacé dans ce dernier.

11. Dispositif suivant la revendication 10, caractérisé en ce que la section transversale du poinçon (16) correspond à la section transversale intérieure du gabarit (5).

12. Dispositif suivant l'une quelconque des revendications 1 à 11, caractérisé en ce que le gabarit (5) comporte une bride extérieure (13), de préférence périphérique, qui est reliée de façon amovible à une plaque de base (14).

13. Dispositif suivant la revendication 12, caractérisé en ce que la plaque de base (14) comporte une ouverture (15) à travers laquelle s'étend une tige d'actionnement (17) reliée au poinçon (16).

14. Dispositif suivant la revendication 12, caractérisé en ce que la plaque de base (14) comporte une ouverture (15) par laquelle peut passer le poinçon (16).

15. Dispositif suivant l'une quelconque des revendications précédentes, caractérisé en ce que le dispositif d'enroulement comporte au moins deux mandrins d'enroulement (24, 25, 26) disposés sur un support, qui peuvent être mis en prise avec la ou les pile(s) (1, 2, 3).

16. Dispositif suivant la revendication 15, caractérisé en ce que les mandrins d'enroulement (24, 25, 26) ont une section transversale adaptée aux forces d'enroulement, mais aussi faible que possible, ayant notamment la forme d'une goutte ou d'une goutte courbe.

17. Dispositif suivant la revendication 15 ou 16, caractérisé en ce que les mandrins d'enroulement (24, 25, 26) peuvent être enserrés des deux côtés dans un dispositif d'enroulement.

18. Dispositif suivant l'une quelconque des revendications précédentes, caractérisé en ce que le gabarit (5) et le dispositif d'enroulement peuvent tourner l'un par rapport à l'autre.

19. Dispositif suivant l'une quelconque des revendications précédentes, caractérisé en ce que le gabarit (5) est réalisé d'un seul tenant.

20. Dispositif suivant l'une quelconque des revendications précédentes, caractérisé en ce que le gabarit (5) comporte au moins deux segments de gabarit.

21. Dispositif suivant l'une quelconque des revendications précédentes, caractérisé en ce que le dispositif destiné à enrouler deux ou plusieurs piles (1, 2, 3) de couches de tôles repliées autour de lignes d'inflexion (21, 22, 23) comporte au niveau du dispositif d'enroulement du type fourche un nombre de mandrins d'enroulement (24, 25, 26) correspondant au nombre de piles, et un nombre identique de passages (8, 9, 10).

22. Procédé destiné à la fabrication d'un corps alvéolaire, comportant une pluralité de canaux pouvant être traversés par un fluide, constitué d'une pluralité de couches de tôles au moins partiellement structurées, selon lequel
- au moins une pile (1, 2, 3) constituée de plusieurs couches de tôles au moins partiellement structurées est empilée,
- chaque pile (1, 2, 3) est introduite dans un gabarit (5) correspondant à la forme extérieure du corps alvéolaire à fabriquer,
- au moins une extrémité de chaque pile (1, 2, 3) dépasse du gabarit (5) par au moins un passage (8, 9, 10),
- chaque pile (1, 2, 3) est retenue par un dispositif d'enroulement disposé dans la zone centrale du gabarit (5), et
- toutes les piles (1, 2, 3) sont enroulées en un corps alvéolaire qui remplit l'ensemble du gabarit (5) par une rotation du dispositif d'enroulement par rapport au gabarit (5), en faisant rentrer dans le gabarit (5) les extrémités de pile dépassant de ce dernier.

23. Procédé suivant la revendication 22, selon lequel
- au moins deux piles (1, 2, 3) constituées de plusieurs couches de tôles au moins partiellement structurées sont empilées,
- chaque pile (1, 2, 3) est repliée autour d'une ligne d'inflexion respective (21, 22, 23), et
- les piles (1, 2, 3) sont introduites dans un gabarit (5) correspondant à la forme extérieure du corps alvéolaire à fabriquer, et retenues dans ce dernier dans une zone centrale par un dispositif d'enroulement, un mandrin d'enroulement (24, 25, 26) étant de préférence prévu au niveau de chaque ligne d'inflexion (21, 22, 23).

24. Procédé suivant la revendication 23, selon lequel les deux extrémités de chaque pile (1, 2, 3) dépassent respectivement vers l'extérieur à travers le même passage (8, 9, 10) lors de l'introduction dans le gabarit (5).
